# EUROPEAN PATENT APPLICATION

(11) **EP 4 209 879 A1**
(43) Date of publication of application: **12.07.2023**
(21) Application number: 21863373.3
(22) Date of filing: 09.07.2021
(51) Int. Cl.: G06F 3/0482, G06F 9/445, G06F 9/451

(54) **TASK GROUP POSITIONING METHOD AND APPARATUS**

(30) Priority: 01.09.2020 CN 202010906868
(71) Applicant: Beijing Dajia Internet Information Technology Co., Ltd., Beijing 100085 (CN)
(72) Inventor: LIANG, Songyu, Beijing 100085 (CN)
(74) Representative: advotec.
(86) International application number: PCT/CN2021/105447
(87) International publication number: WO 2022/048305

(57) **Abstract**

The present disclosure relates to a task group positioning method and a task group positioning apparatus. The method includes: displaying a task list, wherein the task list comprises one or more task groups, and each task group comprises one or more tasks; displaying a navigation floating window in response to monitoring a navigation outgoing call operation, wherein, for each task group in the task list, the navigation floating window comprises a task group control corresponding to the task group; and positioning a position of a first task group in the task list into a display area in response to monitoring a positioning operation performed on a first task group control in the navigation floating window. Therefore, by performing the positioning operation on the task group control displayed in the navigation floating window, the task group corresponding to the control and the tasks included in the task group can be displayed in the display area, thereby realizing the purpose of quickly positioning the task group designated by the user.

## Description

### CROSS-REFERENCE TO RELATED APPLICATIONS

This application claims priority to Chinese Patent Application No. 202010906868.3, filed on September 1, 2020, the entire content of which is incorporated herein by reference.

### TECHNICAL FIELD

The present disclosure relates to the field of Internet technology, in particular to a task group positioning method and a task group positioning apparatus.

### BACKGROUND

Currently, a large number of task data are often accumulated in project management products, and these tasks are grouped. With the accumulation of business, the amount of the task data increases. Correspondingly, the amount of task groups also increases, and the user needs to browse the task data in each task group sequentially to find the required task.

However, when the amount of the task data reaches a huge number (for example, 1000), it is difficult to find and position the task required by the user in the task list.

### SUMMARY

The present disclosure provides a task group positioning method and a task group positioning apparatus. The technical solution of the present disclosure is provided as follows.

According some embodiments of the present disclosure, a task group positioning method is provided. The method includes: displaying a task list, in which the task list includes one or more task groups, and each task group includes one or more tasks; displaying a navigation floating window in response to detecting a navigation outgoing call operation, in which for each task group in the task list, the navigation floating window includes a task group control corresponding to the task group, and an order of task group controls in the navigation floating window matches an order of the task groups in the task list; and positioning a position of a first task group in the task list into a display area in response to detecting a positioning operation performed on a first task group control in the navigation floating window.

In some embodiments, the method further includes: performing an editing operation on a task group control corresponding to at least one task group in the navigation floating window in response to detecting an editing operation performed on the at least one task group.

In some embodiments, the method further includes: in response to detecting an operation of creating a task group, obtaining an identifier of the created task group and a sorting position of the created task group; and adding a control corresponding to the created task group at the sorting position in the navigation floating window, wherein the control corresponding to the created task group includes the identifier of the created task group.

In some embodiments, the method further includes: in response to detecting a dragging operation performed on a second task group control in the navigation floating window, obtaining an update order of controls in the navigation floating window; and adjusting the order of the task groups in the task list according to the update order.

In some embodiments, the method further includes: dragging a third task group control in the navigation floating window in response to detecting a dragging operation performed on the third task group control; obtaining a first position of the third task group control in the navigation floating window after the dragging operation; and obtaining a second position in the task list that matches the first position, and adjusting a position of a third task group in the task list to the second position.

In some embodiments, positioning the position of the first task group in the task list into the display area includes: determining a reference distance between an initial position of the first task group in the task list and a top of the task list; and setting a third position in the task list to be at the same height as a top of the display area in response to a difference between the reference distance and a preset margin being smaller than a threshold, in which the third position is a position with a distance of the difference to the top of the task list.

In some embodiments, the threshold is a difference value between a height of the task list and a height of the display area.

In some embodiments, the method further includes: setting a bottom of the display area and a bottom of the task list to be at the same height in response to the difference between the reference distance and the preset margin being greater than or equal to the threshold.

According some embodiments of the present disclosure, a task group positioning apparatus is provided. The apparatus includes: a displaying unit, a detecting unit and a positioning unit. The displaying unit is configured to display a task list, in which the task list includes one or more task groups, and each task group includes one or more tasks. The detecting unit is configured to display a navigation floating window in response to detecting a navigation outgoing call operation, in which for each task group in the task list, the navigation floating window includes a task group control corresponding to the task group, and an order of task group controls in the navigation floating window matches an order of the task groups in the task list. The positioning unit is configured to position a position of a first task group in the task list into a display area in response to detecting a positioning operation performed on a first task group control in the navigation floating window.

In some embodiments, the apparatus further includes an executing unit. The executing unit is configured to perform an editing operation on a task group control corresponding to at least one task group in the navigation floating window in response to detecting an editing operation performed on the at least one task group.

In some embodiments, the apparatus further includes: an obtaining module and an adding unit. The obtaining module is configured to, in response to detecting an operation of creating a task group, obtain an identifier of the created task group and a sorting position of the created task group. The adding unit is configured to add a control corresponding to the created task group at the sorting position in the navigation floating window, in which the control corresponding to the created task group includes the identifier of the created task group.

In some embodiments, the detecting unit is further configured to, in response to detecting a dragging operation performed on a second task group control in the navigation floating window, obtain an update order of controls in the navigation floating window. The apparatus further includes an adjusting unit, configured to adjust the order of the task groups in the task list according to the update order.

In some embodiments, the detecting unit is further configured to drag a third task group control in the navigation floating window in response to detecting a dragging operation performed on the third task group control. The obtaining unit is further configured to obtain a first position of the third task group control in the navigation floating window after the dragging operation. The adjusting unit is further configured to obtain a second position in the task list that matches the first position, and adjust a position of a third task group in the task list to the second position.

In some embodiments, the positioning unit is further configured to: determine a reference distance between an initial position of the first task group in the task list and a top of the task list; and set a third position in the task list to be at the same height as a top of the display area in response to a difference between the reference distance and a preset margin being smaller than a threshold, in which the third position is a position with a distance of the difference to the top of the task list.

In some embodiments, the threshold is a difference value between a height of the task list and a height of the display area.

In some embodiments, the positioning unit is further configured to set a bottom of the display area and a bottom of the task list to be at the same height in response to the difference between the reference distance and the preset margin being greater than or equal to the threshold.

According to some embodiments of the present disclosure, an electronic device is provided. The electronic device includes: a processor; and a memory for storing the processor-executable instructions; in which, the processor is configured to execute the instructions, to implement the task group positioning method according to the above embodiments.

According to some embodiments of the present disclosure, a non-transitory computer-readable storage medium is provided. When the instructions in the storage medium are executed by the processor of the electronic device, the electronic device can execute the task group positioning method described in the above embodiments.

According to some embodiments of the present disclosure, a computer program product is provided. When the instructions in the computer program product are executed by a processor of an electronic device, the electronic device can execute the task group positioning method described in the above embodiments.

With the embodiments of the present disclosure, a task list is displayed, the task list includes one or more task groups, and each task group includes one or more tasks. A navigation floating window is displayed in response to detecting a navigation outgoing call operation. For each task group in the task list, the navigation floating window includes a task group control corresponding to the task group. A position of a first task group in the task list is positioned into a display area in response to detecting a positioning operation performed on a first task group control in the navigation floating window. Therefore, by performing a positioning operation on the task group control displayed in the navigation floating window, the task group corresponding to the control and the tasks included in the task group can be displayed in the display area, thereby realizing the purpose of quickly positioning the task group designated by the user.

It should be understood that the above general description and the following detailed description are only exemplary and explanatory, and cannot limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of a task group positioning method according to an exemplary embodiment.
FIG. 2 is an example interface diagram of displayed page content according to an exemplary embodiment.
FIG. 3 is an example interface diagram of displayed page content according to another exemplary embodiment.
FIG. 4 is a flowchart of a task group positioning method according to another exemplary embodiment.
FIG. 5 is a flowchart of a task group positioning method according to another exemplary embodiment.
FIG. 6 is a flowchart of a task group positioning method according to another exemplary embodiment.
FIG. 7 is an example interface diagram of displayed page content according to another exemplary embodiment.
FIG. 8 is a flowchart of a method for positioning the first task group according to an exemplary embodiment.
FIG. 9 is a block diagram of a task group positioning apparatus according to an exemplary embodiment.
FIG. 10 is a block diagram of an electronic device for positioning a task group according to an exemplary embodiment.

### DETAILED DESCRIPTION

In order to make those skilled in the art better understand the technical solution of the present disclosure, the technical solution in the embodiments of the present disclosure will be clearly and completely described below with reference to the accompanying drawings.

It can be further understood that the terms "first" and "second" in the description and claims of the present disclosure and the above drawings are used to distinguish similar objects, and are not necessarily used to describe a specific sequence or a precedence order. It is understood that the data used are interchangeable under appropriate circumstances, so that the embodiments of the present disclosure described herein can be practiced in sequences other than those illustrated or described herein. The implementations described in the illustrative examples below are not intended to represent all implementations consistent with this disclosure. Rather, they are merely examples of apparatus and methods consistent with some aspects of the present disclosure as recited in the appended claims.

All the embodiments of the present disclosure may be implemented independently or in combination with other embodiments, which are not limited in the present disclosure.

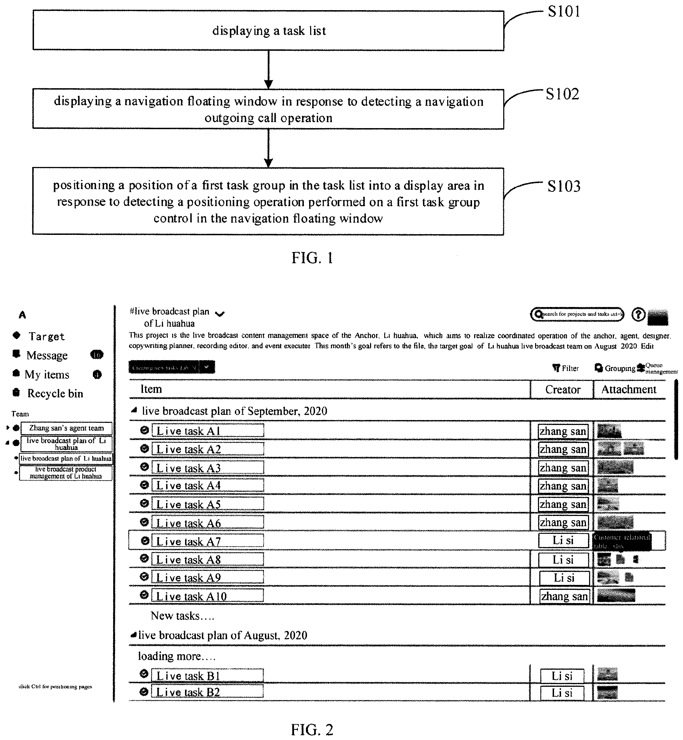

FIG. 1 is a flowchart of a task group positioning method according to an exemplary embodiment. As shown in FIG. 1, the task group positioning method is applied to an electronic device. The method includes the following steps.

In step S101, a task list is displayed.

The task list includes one or more task groups, and each task group includes one or more tasks.

In the embodiments of the present disclosure, the task list includes one or more task groups, and each task group may have tasks with different requirements. For example, the task group may be a requirement task or a bug task. Each task group may also include one or more tasks, for example, a task group may include 50 tasks or 100 tasks. In this disclosure, the number of the task groups and the number of the tasks in each task group are not limited.

In the embodiments of the present disclosure, part of the task list may be displayed in the display area. The display area refers to an area for displaying the task list, which may be used for displaying one or more task groups in the task list, and/or displaying one or more tasks contained in each task group.

It can be understood that since the display interface of the display area is limited, when there are a plurality of task groups in the task list, and each task group includes a plurality of tasks, not all tasks contained in all the task groups can be displayed in the display area. Therefore, part of the task group or part of the tasks in the task list can be displayed in the display area.

For example, as shown in FIG. 2, assuming that the project is a live broadcast plan with the code "A", multiple task groups in the task list can be live broadcast content within different time periods. For example, task group 1 can be a live broadcast plan of September, 2020, which includes 10 live broadcast tasks, and the 10 live broadcast tasks are 10 live broadcast contents displayed in September, task group 2 may be a live broadcast plan of August, 2020, and task group 2 can include 5 live broadcast tasks, and the 5 live broadcast tasks are 5 live broadcast contents displayed in August. FIG. 2 is an example diagram of tasks included in task group 1 and task group 2 displayed in the display area in the task list.

In step S102, a navigation floating window is displayed in response to detecting a navigation outgoing call operation.

The navigation floating window includes controls of multiple task groups, and an ordering of task group controls in the navigation floating window matches an ordering of the multiple task groups in the task list. In detail, the task group controls in the navigation floating window correspond to the task groups in task list, the ordering of task group controls in the navigation floating window is consistent with the ordering of task groups in the task list.

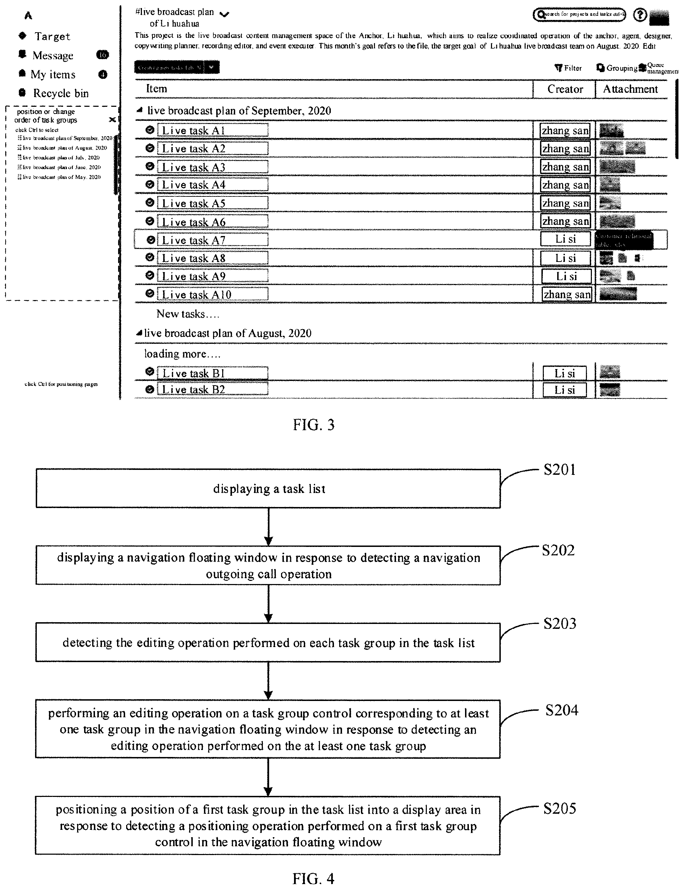

In the embodiment of the present disclosure, the task group controls can be used to distinguish different task groups. For example, the task group controls displayed in the navigation floating window in FIG. 3 are matched with the ordering of the task groups in the task list respectively. The order of task group controls shown in the navigation floating window in FIG. 3 is matched with a live broadcast plan of September, 2020, a live broadcast plan of August, 2020, a live broadcast plan of July, 2020, a live broadcast plan of June, 2020, and a live broadcast plan of May, 2020 in the task group respectively, that is, the ordering of task group controls is consistent with the ordering of task groups in the task list.

In the embodiments of the present disclosure, after part of the task list is displayed in the display area, if the user wants to quickly find the required task, operation can be performed the page, so that the content of the page is displayed in response to the user operation in the navigation floating window, to display the task group controls in the navigation floating window.

For example, when the electronic device detects that the user press the "Ctrl" key, that is, the electronic device detects a navigation outgoing call operation by the user, the navigation floating window is displayed on the page in response to the user operation.

For example, when the task group and tasks contained in the task group are displayed on the page in FIG. 2, after the user presses the "Ctrl" key and the electronic device detects the navigation outgoing call operation, in response to the user operation, the navigation floating window is displayed on the lower left part of the page. As shown in FIG. 3, the dashed box is a navigation floating window displayed on the page. The navigation floating window includes multiple task group controls, and the ordering of task group controls in the navigation floating window is matched with the ordering of task groups in the task list.

In the embodiment of the present disclosure, when part of the task list is displayed in the display area, the user operation can be detected in real time, and after the user operation is detected, in response to the user operation, editing operations such as deleting, adding, and modifying each task group in the task list and the tasks contained in each task group can be performed.

For example, the task group 1 displayed in the display area in FIG. 2, that is, the live broadcast plan of September, 2020, can be deleted, and live broadcast task A11 can be added to the live broadcast plan of September, 2020, or, the order of the live broadcast plan of September, 2020 and the order of the live broadcast plan of August, 2020 can be swapped.

It should be noted that when the editing operations such as deleting, adding, and modifying the task group displayed in the display area are performed, the corresponding editing operation is performed on the corresponding task group controls displayed in the navigation floating window.

In step S 103, a position of a first task group in the task list is positioned into a display area in response to detecting a positioning operation performed on a first task group control in the navigation floating window.

In the embodiment of the present disclosure, after detecting the navigation outgoing call operation and displaying the navigation floating window on the page, the user can perform a positioning operation on each task group control included in the navigation floating window. After detecting the positioning operation performed on the first task group control in the navigation floating window, the electronic device can position the position of the first task group in the task list into the display area in response to the positioning operation. In an embodiment, the positioning operation may be clicking a task group control by a mouse, a touch display screen or a mechanical or virtual keyboard.

For example, after the user performs the positioning operation on the first task group control in the navigation floating window and the electronic device detects the positioning operation, the position of the first task group in the task list is positioned into the display area, to display one or more tasks in the first task group in the display area. Thus, in response to the positioning operation, the task group that the user wants to view can be quickly positioned, so as to display the task group that the user wants to view in the display area.

For example, after the user performs the positioning operation on the control of "live broadcast plan of June, 2020" in the navigation floating window in FIG. 3, after the electronic device detects the positioning operation, in response to the positioning operation, the position of the task list "live broadcast plan of June, 2020" is positioned on the display area, to display multiple live broadcast tasks in the task group of "live broadcast plan of June, 2020" in the display area.

According to the task group positioning method of the embodiments of the present disclosure, a task list is displayed, the task list includes one or more task groups, and each task group includes one or more tasks. A navigation floating window is displayed in response to detecting a navigation outgoing call operation. For each task group in the task list, the navigation floating window includes a task group control corresponding to the task group. A position of a first task group in the task list is positioned into a display area in response to detecting a positioning operation performed on a first task group control in the navigation floating window. Therefore, by performing a positioning operation on the task group control displayed in the navigation floating window, the task group corresponding to the control and the tasks included in the task group can be displayed in the display area, thereby realizing the purpose of quickly positioning the task group designated by the user.

In the embodiment of the present disclosure, after the navigation floating window is displayed on the page, editing operations such as modification and deletion can be performed on one or more task groups contained in the task list. Correspondingly, in the navigation floating window, the control of the task group also performs the corresponding editing operation, so as to realize the purpose of modifying the identifier and/or deleting the task group, which solves the problem that when there are a large amount of task data in the task list in the related art, the user may not able to find a technical problem with the required task.

FIG. 4 is a flowchart of another task group positioning method according to an exemplary embodiment. As shown in FIG. 4, the task group positioning method may further include the following steps.

In step S201, a task list is displayed.

In step S202, a navigation floating window is displayed in response to detecting a navigation outgoing call operation.

In the embodiment of the present disclosure, for the implementation process of step S201 and step S202, reference may be made to the implementation process of step S101 and step S102 in the foregoing embodiment, and details are not repeated here.

In step S203, an editing operation on each task group in the task list is detected.

In the embodiment of the present disclosure, the editing operations performed by the user on each task group in the task list can be detected in real time. The editing operation includes at least modifying the identifier and deleting the task group.

In a possible situation of the embodiments of the present disclosure, modifying the identifier refers to modifying the identifier of each task group. In detail, the identifier of the task group may be the name of the task group. For example, "live broadcast plan of September, 2020" in FIG. 3 can be changed to "live broadcast content of September".

In another possible situation of the embodiments of the present disclosure, the task group in the task list may be deleted, for example, "live broadcast plan of September, 2020" in FIG. 3 may be deleted.

In step S204, an editing operation is performed on a task group control corresponding to at least one task group in the navigation floating window in response to detecting an editing operation performed on the at least one task group.

In the embodiment of the present disclosure, in the process of detecting the editing operation performed on each task group in the task list, in response to detecting the editing operation performed on the at least one task group, the editing operation is performed on a task group control corresponding to at least one task group in the navigation floating window.

In a possible situation of the embodiment of the present disclosure, in response to detecting an operation of modifying the identifier of a certain task group in the task list, the corresponding modification operation is performed on the task group control corresponding to the task group in the navigation floating window. As shown in FIG. 3, in the case of detecting the operation of modifying the "live broadcast plan of September, 2020" in the task list to "live broadcast content of September", correspondingly, the "live broadcast plan of September, 2020" is changed to "live broadcast content of September" in the navigation floating window.

In a possible situation of the embodiment of the present disclosure, in response to detecting the operation of deleting a certain task group in the task list, the task group control corresponding to the task group can be deleted in the navigation floating window. As shown in FIG. 3, in response to detecting that the task group of "live broadcast plan of September, 2020" in the task list is deleted, the control of "live broadcast plan of September, 2020" is deleted in the navigation floating window.

In step S205, a position of a first task group in the task list is positioned into a display area in response to detecting a positioning operation performed on a first task group control in the navigation floating window.

In the embodiment of the present disclosure, for the implementation process of step S205, reference may be made to the implementation process of step S 103 in the foregoing embodiment, and details are not described herein again.

According to the task group positioning method in the embodiments of the present disclosure, a task list is displayed, and a navigation floating window is displayed in response to detecting a navigation outgoing call operation. The editing operations performed on each task group in the task list is detected. The editing operations include modifying identifiers and/or deleting task groups. The editing operation is performed on a task group control corresponding to at least one task group in the navigation floating window in response to detecting an editing operation performed on the at least one task group. Furthermore, a position of a first task group in the task list is positioned into a display area in response to detecting a positioning operation performed on a first task group control in the navigation floating window. In this way, while quickly positioning tasks in each task group in the task list, the task group in the task list can also be edited, so as to satisfy user requirements to modify the identifier of each task group and/or delete the task group.

In practical application scenarios, the user can also create a new task group in the task list, and add controls corresponding to the newly created task groups in the corresponding positions in the navigation floating window, to meet the user requirements of adding new task groups in the task list.

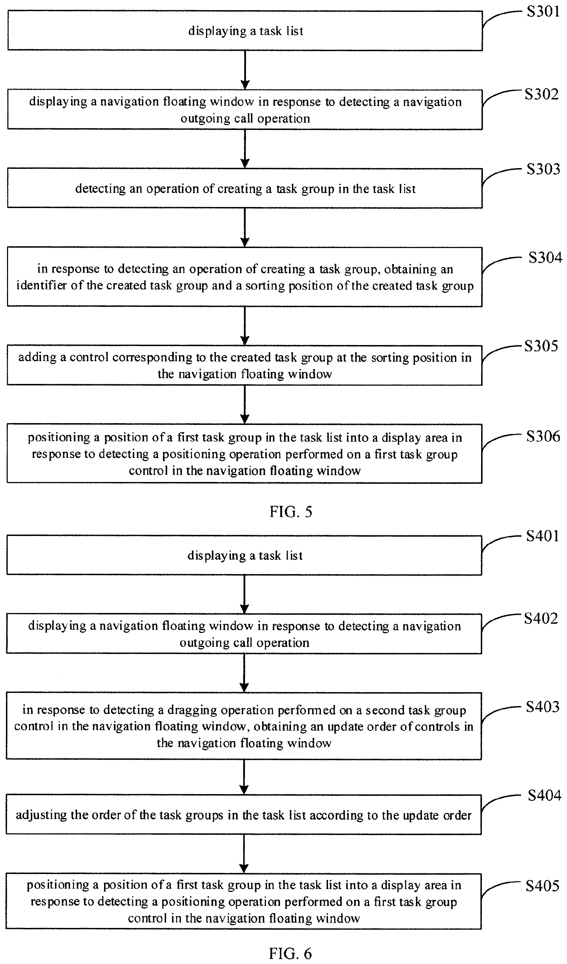

FIG. 5 is a flowchart of another task group positioning method according to an exemplary embodiment. As shown in FIG. 5, the task group positioning method may further include the following steps.

In step S301, a task list is displayed.

In step S302, a navigation floating window is displayed in response to detecting a navigation outgoing call operation.

In this embodiment of the present disclosure, for the implementation process of step S301 and step S302, reference may be made to the implementation process of step S101 and step S102 in the foregoing embodiment, and details are not described herein again.

In step S303, an operation of creating a task group in the task list is detected.

Creating a task group refers to the operation used to create a new task group.

In the embodiment of the present disclosure, the task list can be detected in real time to determine whether the user performs the operation of creating a task group in the task list.

In step S304, in response to detecting an operation of creating a task group, an identifier of the created task group and a sorting position of the created task group are obtained.

In the embodiment of the present disclosure, in the process of detecting the operation of creating a task group in the task list, in response to detecting the operation of creating a task group in the task list, an identifier of the task group newly created by the user and a sorting position of the created task group are obtained. The sorting position refers to the position of the created task group in the task list.

That is, the user can create a new task group at any position in the task list. After the electronic device detects that the operation of creating a task group in the task list is performed, the identifier of the created task and the sorting position of the created task group are determined according to the creating operation of the user.

As shown in FIG. 3, in the case where the electronic device detects the operation of creating a task group in the task list, it is assumed that the task group created by the user is "live broadcast plan of April, 2020", and the sorting position of the created task group is located after the position of "live broadcast plan of May, 2020", then the identifier of the created task group can be obtained as "live broadcast plan of April, 2020", and the sorting position of the created task group is obtained.

In step S305, a control corresponding to the created task group is added at the sorting position in the navigation floating window.

The control corresponding to the created task group includes the identifier of the created task group.

In the embodiment of the present disclosure, after obtaining the identifier of the created task group and the sorting position of the created task group according to the detected operation of creating a task group, the corresponding sorting position in the navigation floating window is added to the control corresponding to the created task group correspondingly.

As shown in FIG. 3, in response to detecting that the task group in the task list created by the user is "live broadcast plan of April, 2020", and the sorting position of the created task group is located after the position of "live broadcast plan of May, 2020", the control of "live broadcast plan of April, 2020" corresponding to the created task group is added at the corresponding sorting position in the navigation floating window, that is, the task group control of "live broadcast plan of April, 2020" is added after that of "live broadcast plan of May, 2020" in the navigation floating window.

In step S306, a position of a first task group in the task list is positioned into a display area in response to detecting a positioning operation performed on a first task group control in the navigation floating window.

In the embodiment of the present disclosure, for the implementation process of step S306, reference may be made to the implementation process of step S103 in the foregoing embodiment, and details are not described herein again.

According to the task group positioning method in the embodiment of the present disclosure, a task list is displayed, and a navigation floating window is displayed in response to detecting a navigation outgoing call operation. The editing operations performed on each task group in the task list is detected. In response to detecting the operation of creating a task group, the identifier of the created task group and the sorting position of the created task group are obtained, and a control corresponding to the created task group is added at the sorting position in the navigation floating window. A position of a first task group in the task list is positioned into a display area in response to detecting a positioning operation performed on a first task group control in the navigation floating window. In this way, while realizing the rapid positioning of tasks in each task group in the task list, a new task group can be created in the task list, thereby satisfying the user requirements for quickly positioning each task group and creating a new task group.

In the actual application scenario, when there are multiple task groups in the task list, the user can quickly adjust the order of task groups in the task list based on importance values of the tasks contained in each task group respectively, to meet the user requirements on modifying the ordering of the task groups.

FIG. 6 is a flowchart of another task group positioning method according to an exemplary embodiment. As shown in FIG. 6, the task group positioning method may further include the following steps.

In step S401, a task list is displayed.

In step S402, a navigation floating window is displayed in response to detecting a navigation outgoing call operation.

In the embodiment of the present disclosure, for the implementation process of step S401 and step S402, reference may be made to the implementation process of step S101 and step S 102 in the foregoing embodiment, and details are not repeated here.

In step S403, in response to detecting a dragging operation performed on a second task group control in the navigation floating window, an update order of controls in the navigation floating window is obtained.

Since the task group controls that perform the positioning operation and the dragging operation in the navigation floating window may not be the same task group control, the task group for performing the positioning operation in the navigation floating window is named as the first task group, and the task group for performing the dragging operation is named as the second task group.

It should be noted that, after performing the dragging operation on a certain task group control, the positioning operation can be performed on the task group control, that is, the first task group and the second task group may also be the same task group.

In the embodiment of the present disclosure, when there are dozens or even hundreds of task groups in the task list, the position of each task group can be quickly adjusted by performing the dragging operation on the control corresponding to the task group. After detecting the dragging operation performed by the user on the second task group control in the navigation floating window, the electronic device can obtain the update order of the controls in the navigation floating window in response to the dragging operation.

As shown in FIG. 3, assuming that the dragging operation is performed on the control of "live broadcast plan of May, 2020" in FIG. 3, a relative position between the control of "live broadcast plan of May, 2020" and other task group controls can be adjusted in the navigation floating window. For example, the position of the "live broadcast plan of May, 2020" can be adjusted to a position between the control of "live broadcast plan of September, 2020" and the control of "live broadcast plan of August, 2020".

In step S404, the order of the task groups in the task list is adjusted according to the update order.

In the embodiment of the present disclosure, after the navigation floating window performs the dragging operation on the controls corresponding to the task groups in the task list, to adjust the position of each task group in the navigation floating window, and after determining the update order of the controls in the navigation floating window, the order of the task groups in the task list is adjusted according to the update order.

In a possible situation, in the case where the electronic device detects the dragging operation performed on the second task group control in the navigation floating window, each task in the second task group is in the display area, in response to the dragging operation performed on the second task group control, positions between the second task group control and the remaining task group controls in the display area are adjusted in the navigation floating window, to obtain the update order of the controls. According to the update order, after adjusting the order of the task groups in the task list, when displaying the task groups in the task list in the display area, the task group displayed in the display area is part of the task groups in the display area after adjusting the task list.

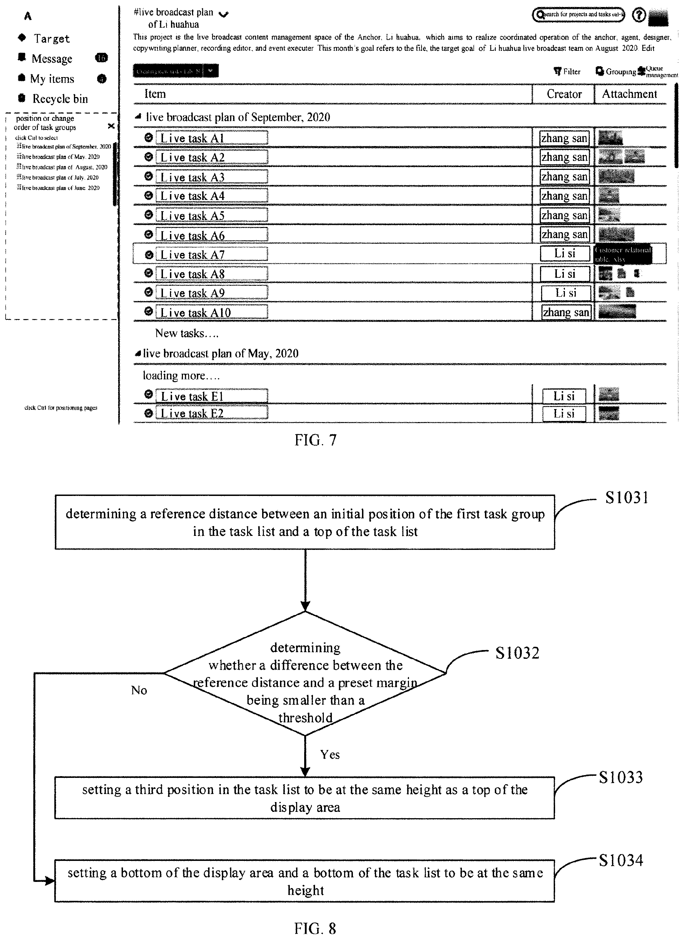

As shown in FIG. 3, assuming that the dragging operation is performed on the control of the "live broadcast plan of May, 2020", in response to the adjusted update order, that is, the "live broadcast plan of May, 2020" is located between the control of "live broadcast plan of September, 2020" and the control of "live broadcast plan of August, 2020", the page content in the adjusted task list can be displayed as shown in FIG. 7.

In step S405, a position of a first task group in the task list is positioned into a display area in response to detecting a positioning operation performed on a first task group control in the navigation floating window.

In the embodiment of the present disclosure, for the implementation process of step S405, reference may be made to the implementation process of step S 103 in the foregoing embodiment, and details are not described herein again.

According to the task group positioning method of the embodiments of the present disclosure, a task list is displayed. A navigation floating window is displayed in response to detecting a navigation outgoing call operation. In response to detecting a dragging operation performed on a second task group control in the navigation floating window, o an update order of controls in the navigation floating window is obtained. The order of the task groups in the task list is adjusted according to the update order. A position of a first task group in the task list is positioned into a display area in response to detecting a positioning operation performed on a first task group control in the navigation floating window. In this way, while quickly positioning the specified task group in the task list, the order of the task groups in the task list can be quickly adjusted, so as to meet the user requirements for updating the order of the task groups.

In a possible implementation of the embodiments of the present disclosure, after a navigation floating window is displayed in response to the electronic device detecting a navigation outgoing call operation, a third task group control is dragged in the navigation floating window in response to detecting a dragging operation performed on the third task group control. A first position of the third task group control in the navigation floating window after the dragging operation is obtained. A second position in the task list that matches the first position is obtained, and a position of a third task group in the task list is adjusted to the second position.

It should be understood that the position of the first position in the order of the task group controls in the navigation floating window is the same as the position of the second position in the order of the task groups in the task list.

As shown in FIG. 3, assuming that the dragging operation is performed on the control of "live broadcast plan of August, 2020", the first position of the control of "live broadcast plan of June, 2020" in the navigation floating window after the dragging operation is between the position of "live broadcast plan of June, 2020" and the position of "live broadcast plan of May, 2020". Correspondingly, the second position of the task group of "live broadcast plan of August, 2020" that matches the first position in the task list is obtained, and the second position is between the position of "live broadcast plan of June, 2020" and the position of "live broadcast plan of May, 2020". The position of the task group of "live broadcast plan of August, 2020" in the task list is adjusted to be between the position of "live broadcast plan of June, 2020" and the position of "live broadcast plan of May, 2020".

It is understood that, when adjusting the position of the third task group, in response to the dragging operation, after determining the position of the third task group control after being dragged in the navigation floating window, the position of the third task group in the task list is adjusted correspondingly. In order to reduce the calculation amount of the processor of the electronic device, it is not necessary to obtain the positions of the remaining task groups in the task list, the position of the third task group in the task list is updated to the adjusted position according to the adjusted position of the third task group control in the navigation floating window.

In a possible implementation of the present disclosure, when positioning the position of the first task group in the task list to the display area, in order to avoid the problem that the first task group cannot be displayed in the display area, the first task group in the task list can be positioned according to the reference distance between an initial position of the first task group in the task list and a top of the task list, and the position of the display area is determined according to the difference between the reference distance and the preset margin and the threshold value, so that one or more tasks included in the first task group can be displayed in the display area.

FIG. 8 is a flowchart of a method for positioning the first task group according to an exemplary embodiment.

As shown in FIG. 8, step S103 may include the following steps.

In step S1031, a reference distance between an initial position of the first task group in the task list and a top of the task list is determined.

The initial position of the first task group may be a position corresponding to the first task of the first task group before the positioning operation is performed.

In the embodiment of the present disclosure, when the electronic device detects the positioning operation performed by the user on the first task group control in the navigation floating window, the initial position of the first task group is determined, and further, the reference distance between the initial position of the first task group in the task list and the top of the task list is determined.

For example, as shown in FIG. 3, in response to the first task group being "live broadcast plan of August, 2020", the initial position of the first task group is the position of the "live broadcast plan of August, 2020" displayed in the current display area. The top of the task list can be the position of "#live broadcast plan of Li huahua" in FIG. 3. Further, the reference distance between the position of "live broadcast plan of August, 2020" and the position of "#live broadcast plan of Li huahua" can be determined.

In step S 1032, it is determined whether a difference between the reference distance and a preset margin is smaller than a threshold.

The basis for the preset margin is the distance between the initial position of the first task group and the last task of the preceding adjacent task group. For example, the preset margin may be 20 pixels.

In the embodiment of the present disclosure, after determining the reference distance between the initial position of the first task group in the task list and the top of the task list, the difference between the reference distance and the preset margin may be determined.

The threshold may be the difference between the height of the task list and the height of the display area.

In the embodiment of the present disclosure, after the difference between the reference distance and the preset margin is determined, a magnitude relationship between the difference between the reference distance and the preset margin and the threshold can be determined, so that the position of the display area is adjusted according to the magnitude relationship.

In step S1033, a third position in the task list is set to be at the same height as a top of the display area in response to a difference between the reference distance and a preset margin being smaller than a threshold.

The third position is a position with a distance of the difference to the top of the task list.

In a possible case, the difference between the reference distance and the preset margin is compared with the threshold, if it is determined that the difference between the reference distance and the preset margin is less than the difference between the height of the task list and the height of the display area, the first task group is not positioned at the rearmost position of the task list. In order to detect the positioning operation of the first task group control in the navigation floating window, the position of the first task group is positioned to the display area, the third position in the task list is set to be the same height as the top of the display area.

As shown in FIG. 3, assuming that the first task group is "live broadcast plan of August, 2020", it is determined that the difference between the reference distance between the initial position of "live broadcast plan of August, 2020" and the top of the task list and the preset margin is less than the threshold, then the position in the task list to the top of the task list is a position with a distance of the difference between the reference distance and the preset margin, which is of the same height as the top of the task list.

In step S 1 034, a bottom of the display area and a bottom of the task list are set to be at the same height in response to the difference between the reference distance and the preset margin being greater than or equal to the threshold.

In another possible case, the difference between the reference distance and the preset margin is compared with the threshold, and it is determined that the difference between the reference distance and the preset margin is greater than or equal to the height of the task list and the display area. In this case, the first task group may be located at the rearmost position of the task list. In order to detect the positioning operation of the first task group control in the navigation floating window, the position of the first task group is positioned to the display area, the bottom of the display area is set to be at the same height as the bottom of the task list. Thus, the tasks of the first task group may be displayed in the display area in response to the user operating the sliding control in the display area.

For example, assuming that the order of the first task group is behind the order of each task group in the task list, after determining the reference distance between the initial position of the first task group and the top of the task list, if the difference between the reference distance and the preset margin is greater than the threshold, the bottom of the display area and the bottom of the task list may be set to the same height to display the first task group.

In the embodiment of the present disclosure, when positioning the position of the first task group in the task list to the display area, the reference distance between the initial position of the first task group in the task list and the top of the task list may be determined. In response to the difference between the reference distance and the preset margin being smaller than the threshold, the third position in the task list is set to be at the same height as the top of the display area, and in response to the difference between the reference distance and the preset margin being greater than or equal to the threshold, the bottom of the display area is set to be at the same height as the bottom of the task list. Thus, by adjusting the position of the display area, the purpose of displaying the first task group in the display area is achieved.

In order to implement the above embodiments, the embodiments of the present disclosure provide a task group positioning apparatus.

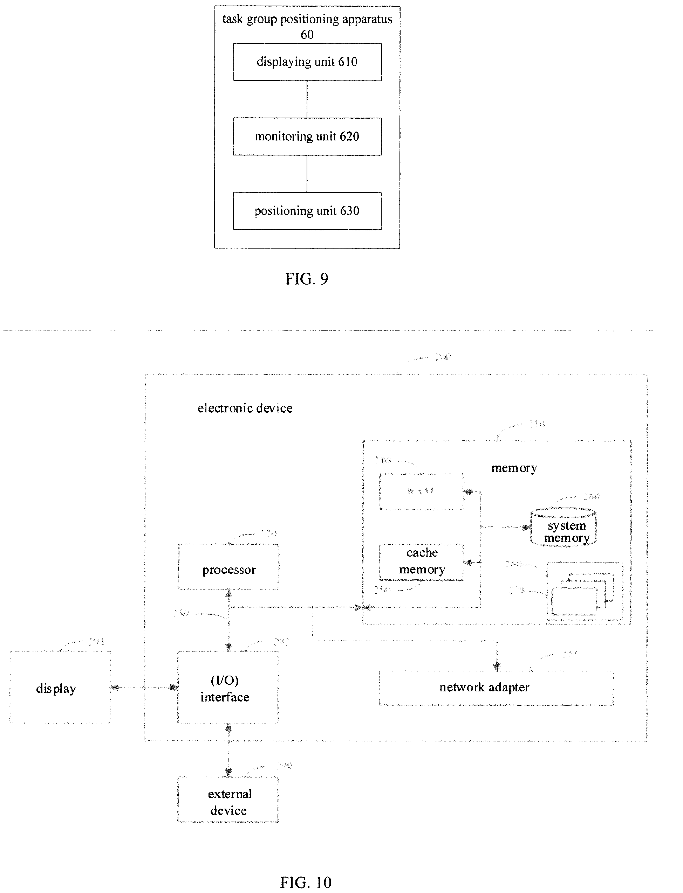

FIG. 9 is a block diagram of a task group positioning apparatus according to an exemplary embodiment. As shown in FIG. 9, the task group positioning apparatus 60 may include: a displaying unit 610, a detecting unit 620 and a positioning unit 630.

The displaying unit 610 is configured to display a task list. The task list includes one or more task groups, and each task group includes one or more tasks.

The detecting unit 620 is configured to display a navigation floating window in response to detecting a navigation outgoing call operation. For each task group in the task list, the navigation floating window includes a task group control corresponding to the task group, and an order of task group controls in the navigation floating window matches an order of the task groups in the task list.

The positioning unit 630 is configured to position a position of a first task group in the task list into a display area in response to detecting a positioning operation performed on a first task group control in the navigation floating window.

In a possible implementation of the embodiments of the present disclosure, the task group positioning apparatus 60 further includes: an executing unit, configured to perform an editing operation on a task group control corresponding to at least one task group in the navigation floating window in response to detecting an editing operation performed on the at least one task group.

In a possible implementation of the embodiments of the present disclosure, the task group positioning apparatus 60 further includes: an obtaining module and an adding unit. The obtaining module is configured to, in response to detecting an operation of creating a task group, obtain an identifier of the created task group and a sorting position of the created task group. The adding unit is configured to add a control corresponding to the created task group at the sorting position in the navigation floating window, in which the control corresponding to the created task group includes the identifier of the created task group.

In a possible implementation of the embodiments of the present disclosure, the detecting unit 620 is further configured to, in response to detecting a dragging operation performed on a second task group control in the navigation floating window, obtain an update order of controls in the navigation floating window. The apparatus 60 further includes an adjusting unit, and the adjusting unit is configured to adjust the order of the task groups in the task list according to the update order.

In a possible implementation of the embodiments of the present disclosure, the detecting unit 620 is further configured to drag a third task group control in the navigation floating window in response to detecting a dragging operation performed on the third task group control. The obtaining unit is further configured to obtain a first position of the third task group control in the navigation floating window after the dragging operation. The adjusting unit is further configured to obtain a second position in the task list that matches the first position, and adjust a position of a third task group in the task list to the second position.

In a possible implementation of the embodiments of the present disclosure, the positioning unit 630 is further configured to: determine a reference distance between an initial position of the first task group in the task list and a top of the task list; and set a third position in the task list to be at the same height as a top of the display area in response to a difference between the reference distance and a preset margin being smaller than a threshold, in which the third position is a position with a distance of the difference to the top of the task list.

In a possible implementation of the embodiments of the present disclosure, the threshold is a difference value between a height of the task list and a height of the display area.

In a possible implementation of the embodiments of the present disclosure, the positioning unit 630 is further configured to set a bottom of the display area and a bottom of the task list to be at the same height in response to the difference between the reference distance and the preset margin being greater than or equal to the threshold.

Regarding the apparatus in the above embodiments, the specific manner in which each module performs the operation has been described in detail in the embodiments of the method, which will not be described in detail.

With the task group positioning apparatus according to embodiments of the present disclosure, a task list is displayed. The task list includes one or more task groups, and each task group includes one or more tasks. A navigation floating window is displayed in response to detecting a navigation outgoing call operation. For each task group in the task list, the navigation floating window includes a task group control corresponding to the task group. A position of a first task group in the task list is positioned into a display area in response to detecting a positioning operation performed on a first task group control in the navigation floating window. Therefore, by performing the positioning operation on the task group control displayed in the navigation floating window, the task group corresponding to the control and the tasks included in the task group can be displayed in the display area, thereby realizing the purpose of quickly positioning the task group specified by the user.

In order to realize the above embodiments, the present disclosure provides an electronic device. The electronic device includes: a processor; and a memory for storing the processor-executable instructions; in which, the processor is configured to execute the instructions to implement the task group positioning method.

FIG. 10 is a block diagram of an electronic device for positioning a task group according to an exemplary embodiment.

As shown in FIG. 10, the electronic device 200 may further include: a memory 210, a processor 220 and a bus 230 connecting different components (including the memory 210 and the processor 220). The memory 210 stores a computer program, and when the processor 220 executes the computer program, the task group positioning method according to the embodiments of the present disclosure is implemented.

The bus 230 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (hereinafter referred to as ISA) bus, a Micro Channel Architecture (hereinafter referred to as MAC) bus, an enhanced ISA bus, a Video Electronics Standards Association (hereinafter referred to as VESA) local bus and a Peripheral Component Interconnection (PCI) bus.

The computer device 200 typically includes a variety of computer system readable media. These media may be any available media accessible by the computer device 200 and includes both volatile and non-transitory media, removable and non-removable media.

The memory 210 may include a computer system readable medium in the form of volatile memory, such as a random access memory (hereinafter referred to as RAM) 240 and/or a high speed cache memory 250. The electronic device 200 may further include other removable or non-removable, volatile or non-transitory computer system storage media. By way of example only, the storage system 260 may be configured to read and write a non-removable and non-transitory magnetic media (not shown in FIG. 10, commonly referred to as a "hard drive"). Although not shown in FIG. 10, a magnetic disk driver for reading from and writing to a removable and non-transitory magnetic disk (such as "floppy disk") and a disk driver for a removable and non-transitory optical disk (such as compact disk read only memory (hereinafter referred to as CD-ROM), Digital Video Disc Read Only Memory (hereinafter referred to as DVD-ROM) or other optical media) may be provided. In these cases, each driver may be connected to the bus 230 via one or more data medium interfaces. The memory 210 may include at least one program product. The program product has a set (such as, at least one) of program modules configured to perform the functions of various embodiments of the present disclosure.

A program/utility 280 having a set (at least one) of the program modules 270 may be stored in, for example, the memory 210. The program modules 270 include but are not limited to, an operating system, one or more application programs, other programs modules, and program data. Each of these examples, or some combination thereof, may include an implementation of a network environment. The program modules 270 generally perform the functions and/or methods in the embodiments described herein.

The electronic device 200 may also communicate with one or more external devices 290 (such as, a keyboard, a pointing device, a display 291, etc.). Furthermore, the electronic device 200 may also communicate with one or more communication devices enabling a user to interact with the electronic device 200 and/or other devices (such as a network card, modem, etc.) enabling the computer device 200 to communicate with one or more computer devices. This communication can be performed via the input/output (I/O) interface 292. Also, the electronic device 200 may communicate with one or more networks (such as a local area network (hereafter referred to as LAN), a wide area network (hereafter referred to as WAN) and/or a public network such as an Internet) through a network adapter 293. As shown, the network adapter 293 communicates with other modules of the electronic device 200 over the bus 230. It should be understood that, although not shown in FIG. 10, other hardware and/or software modules may be used in connection with the electronic device 200. The hardware and/or software includes, but is not limited to, microcode, device drivers, redundant processing units, external disk drive arrays, RAID systems, tap drive and data backup storage system.

The processor 220 executes various functional applications and data processing by executing programs stored in the memory 210.

It should be noted that, for the implementation process and technical principle of the electronic device in this embodiment, reference may be made to the foregoing explanation of the task group positioning method in any embodiment of the present disclosure, and details are not repeated here.

According to the electronic device of the embodiments of the present disclosure, a task list is displayed, the task list includes one or more task groups, and each task group includes one or more tasks. A navigation floating window is displayed in response to detecting a navigation outgoing call operation. For each task group in the task list, the navigation floating window includes a task group control corresponding to the task group. A position of a first task group in the task list is positioned into a display area in response to detecting a positioning operation performed on a first task group control in the navigation floating window. Therefore, by performing a positioning operation on the task group control displayed in the navigation floating window, the task group corresponding to the control and the tasks included in the task group can be displayed in the display area, thereby realizing the purpose of quickly positioning the task group designated by the user.

In order to implement the above embodiments, the present disclosure provides a non-transitory computer-readable storage medium, when the instructions in the storage medium are executed by the processor of the electronic device, the electronic device can execute the task group positioning method according to any of the above embodiments.

In order to implement the above embodiments, the present disclosure provides a computer program product. When the instructions in the computer program product are executed by a processor of an electronic device, the electronic device can execute the task group positioning method according to any of the above embodiments.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A task group positioning method, comprising:
displaying a task list, wherein the task list comprises one or more task groups, and each task group comprises one or more tasks;
displaying a navigation floating window in response to detecting a navigation outgoing call operation, wherein, for each task group in the task list, the navigation floating window comprises a task group control corresponding to the task group, and an order of task group controls in the navigation floating window matches an order of the task groups in the task list; and
positioning a first task group in the task list into a display area in response to detecting a positioning operation performed on a first task group control in the navigation floating window.

2. The method according to claim 1, further comprising:
performing an editing operation on a task group control corresponding to at least one task group in the navigation floating window in response to detecting an editing operation performed on the at least one task group.

3. The method according to claim 1, further comprising:
in response to detecting an operation of creating a task group, obtaining an identifier of the created task group and a sorting position of the created task group; and
adding a control corresponding to the created task group at the sorting position in the navigation floating window, wherein the control corresponding to the created task group comprises the identifier of the created task group.

4. The method according to claim 1, further comprising:
in response to detecting a dragging operation performed on a second task group control in the navigation floating window, obtaining an update order of controls in the navigation floating window; and
adjusting the order of the task groups in the task list according to the update order.

5. The method according to claim 1, further comprising:
dragging a third task group control in the navigation floating window in response to detecting a dragging operation performed on the third task group control;
obtaining a first position of the third task group control in the navigation floating window after the dragging operation; and
obtaining a second position in the task list that matches the first position, and adjusting a position of a third task group in the task list to the second position.

6. The method according to any one of claims 1 to 5, wherein positioning the position of the first task group in the task list into the display area comprises:
determining a reference distance between an initial position of the first task group in the task list and a top of the task list; and
setting a third position in the task list to be at the same height as a top of the display area in response to a difference between the reference distance and a preset margin being smaller than a threshold, wherein the third position is a position with a distance of the difference to the top of the task list.

7. The method according to claim 6, wherein the threshold is a difference value between a height of the task list and a height of the display area.

8. The method according to claim 6, further comprising:
setting a bottom of the display area and a bottom of the task list to be at the same height in response to the difference between the reference distance and the preset margin being greater than or equal to the threshold.

9. A task group positioning apparatus, comprising:
a displaying unit, configured to display a task list, wherein the task list comprises one or more task groups, and each task group comprises one or more tasks;
a detecting unit, configured to display a navigation floating window in response to detecting a navigation outgoing call operation, wherein, for each task group in the task list, the navigation floating window comprises a task group control corresponding to the task group, and an order of task group controls in the navigation floating window matches an order of the task groups in the task list; and
a positioning unit, configured to position a position of a first task group in the task list into a display area in response to detecting a positioning operation performed on a first task group control in the navigation floating window.

10. The apparatus according to claim 9, further comprising:
an executing unit, configured to perform an editing operation on a task group control corresponding to at least one task group in the navigation floating window in response to detecting an editing operation performed on the at least one task group.

11. The apparatus according to claim 9, further comprising:
an obtaining module, configured to, in response to detecting an operation of creating a task group, obtain an identifier of the created task group and a sorting position of the created task group; and
an adding unit, configured to add a control corresponding to the created task group at the sorting position in the navigation floating window, wherein the control corresponding to the created task group comprises the identifier of the created task group.

12. The apparatus according to claim 9, wherein the detecting unit is further configured to, in response to detecting a dragging operation performed on a second task group control in the navigation floating window, obtain an update order of controls in the navigation floating window; and the apparatus further comprises an adjusting unit, the adjusting unit is configured to adjust the order of the task groups in the task list according to the update order.

13. The apparatus according to claim 9, wherein
the detecting unit is further configured to drag a third task group control in the navigation floating window in response to detecting a dragging operation performed on the third task group control;
the obtaining unit is further configured to obtain a first position of the third task group control in the navigation floating window after the dragging operation; and
the adjusting unit is further configured to obtain a second position in the task list that matches the first position, and adjust a position of a third task group in the task list to the second position.

14. The apparatus according to any one of claims 9 to 13, wherein the positioning unit is further configured to:
determine a reference distance between an initial position of the first task group in the task list and a top of the task list; and
set a third position in the task list to be at the same height as a top of the display area in response to a difference between the reference distance and a preset margin being smaller than a threshold, wherein the third position is a position with a distance of the difference to the top of the task list.

15. The apparatus according to claim 14, wherein the threshold is a difference value between a height of the task list and a height of the display area.

16. The apparatus according to claim 14, wherein the positioning unit is further configured to set a bottom of the display area and a bottom of the task list to be at the same height in response to the difference between the reference distance and the preset margin being greater than or equal to the threshold.

17. An electronic device, comprising:
a processor;
a memory for storing processor-executable instructions; wherein
the processor is configured to:
display a task list, wherein the task list comprises one or more task groups, and each task group comprises one or more tasks;
display a navigation floating window in response to detecting a navigation outgoing call operation, wherein, for each task group in the task list, the navigation floating window comprises a task group control corresponding to the task group, and an order of task group controls in the navigation floating window matches an order of the task groups in the task list; and
position a position of a first task group in the task list into a display area in response to detecting a positioning operation performed on a first task group control in the navigation floating window.

18. A non-transitory computer-readable storage medium, when the instructions in the storage medium are executed by a processor of an electronic device, the electronic device is enabled to:
display a task list, wherein the task list comprises one or more task groups, and each task group comprises one or more tasks;
display a navigation floating window in response to detecting a navigation outgoing call operation, wherein, for each task group in the task list, the navigation floating window comprises a task group control corresponding to the task group, and an order of task group controls in the navigation floating window matches an order of the task groups in the task list; and
position a position of a first task group in the task list into a display area in response to detecting a positioning operation performed on a first task group control in the navigation floating window.
